(19)

Europäisches
Patentamt

European
Patent Office

Office européen
des brevets

(11) **EP 3 702 324 A1**

(12) **EUROPEAN PATENT APPLICATION**

(43) Date of publication:
**02.09.2020 Bulletin 2020/36**

(51) Int Cl.:
**B82Y 25/00** (2011.01)   **H01F 1/00** (2006.01)
**B01J 2/00** (2006.01)

(21) Application number: **19159391.2**

(22) Date of filing: **26.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LGC Genomics GmbH**
**12459 Berlin (DE)**

(72) Inventor: **SCHUBERT, Frank**
**12459 Berlin (DE)**

(74) Representative: **Potter Clarkson**
**The Belgrave Centre**
**Talbot Street**
**Nottingham NG1 5GG (GB)**

(54) **METHOD FOR PRODUCING MICROPARTICLES COVERED WITH MAGNETIC OR MAGNETISABLE NANOPARTICLES**

(57)   The present invention is directed to a method for the production of microparticles covered with magnetic or magnetisable nanoparticles, the method comprising the steps of providing microparticles with a mean particle size $S_m$ selected from 1 $\mu$m to 1000 $\mu$m; providing magnetic or magnetisable nanoparticles with a mean particle size $S_n$ selected from 1 nm to 1000 nm; contacting said microparticles and said magnetic or magnetisable nanoparticles to form a mixture; and of physically agitating said mixture of said microparticles and said magnetic or magnetisable nanoparticles under non-liquid conditions until the surface of said microparticles is at least partly covered with said magnetic or magnetisable nanoparticles.

EP 3 702 324 A1

**Description**

Functional microparticles having magnetic properties, in particular, are widely employed in solid phase based isolation/separation processes. For example, their magnetic properties enable users to apply magnetic fields to collect and suspend this type of particles which makes the process automation-friendly.

In particular, magnetic microparticles with surfaces having directed affinities to chemical or biochemical analytes such us proteins, nucleic acids, secondary metabolites etc. are well known in laboratory practice using manual, as well as automated protocols.

Processes of preparation of magnetic microparticles commonly consist of preparing the microparticles separately and cover these basic particles with a layer of magnetic oxide such as magnetite, maghemite or any other ferrit. This is usually carried out using a wet chemical precipitation reaction starting with a mixture of iron salts and increasing pH by addition of alkaline substances, like e.g. ammonia. In US 5,734,020 A is disclosed a process including such chemical precipitation reaction. Such chemical reaction is difficult and tedious to carry out since it has to be carefully controlled both concentration of reactants and parameters of precipitation like speed of addition and temperature.

In an alternative approach, magnetic nanoparticles are synthesized in water suspension by precipitation of, for example, magnetite ($Fe_3O_4$) using well known wet chemical processes forming magnetic cores. In a second step, these magnetic cores are covered with materials which give affine microparticles, see e.g. DE 19912799 A1.

Alternatively, protocols have been developed using so called ferrofluidic formulations of organic monomers. These ferrofluidic formulations consist of superparamagnetic nanoparticles evenly distributed in a monomer bearing vinyl groups. Suspension or emulsion of these ferrofluidic monomers in immiscible carrier mediums are formed and polymerization is started by initiation of a polymerization process, see e.g. US 7,754,278 A. Polymerization in suspension or emulsion leads to polymeric micro-particles having magnetic properties like e.g. Sera-Mag™ and Sera-Mag SpeedBeads Magnetic Particles offered by Sigma-Aldrich.

All these wet chemical reactions are carried out under highly and carefully controlled reaction conditions and include many steps like e.g. separation and washing steps. In addition, handling of magnetic nanoparticles in water suspension is difficult due to long lasting separation processes. Filtration cannot be applied due to the size of the particles.

Thus, there is a need for alternative methods of producing magnetic microparticles which overcome one or more of the drawbacks of the prior art.

The present invention is directed to a method for the production of microparticles covered with magnetic or magnetisable nanoparticles as defined in the claims.

In a first aspect, the present invention is directed to a method for the production of microparticles covered with magnetic or magnetisable nanoparticles, the method comprising the steps:

- providing microparticles with a mean particle size $S_m$ selected from 1 $\mu$m to 1000 $\mu$m;

- providing magnetic or magnetisable nanoparticles with a mean particle size $S_n$ selected from 1 nm to 1000 nm;

- contacting said microparticles and said magnetic or magnetisable nanoparticles to form a mixture;

- physically agitating said mixture of said microparticles and said magnetic or magnetisable nanoparticles under non-liquid conditions; preferably said physical agitation is conducted until the surface of said microparticles is at least partly covered with said magnetic or magnetisable nanoparticles.

Surprisingly, it was found that incubation of microparticles with magnetic or magnetisable nanoparticles with physical agitation under non-liquid conditions leads to microparticles that are covered with magnetic or magnetisable nanoparticles tightly bound on their surface.

This process can be supported by addition of an additional component which increases the affinity of the magnetic or magnetisable nanoparticles to the surface of the microparticles and/or which strengthens the interaction between said micro- and nanoparticles, thereby rendering the layer more stable. According to the present invention, these additional components promoting the interaction between the surface of the microparticles and the magnetic or magnetisable nanoparticles can be chosen from the group of ionic and non-ionic detergents, particularly anionic detergents like detergents with long aliphatic chains. For example, salts of oleic acid are particularly suited, but any other detergent of this group like sodium dodecylsulfat (SDS). sodium laurate can be employed, as well.

In addition, this covering of magnetic or magnetisable nanoparticles to a surface of said microparticles can be supported by pretreatment of surface of microparticles like etching, swelling, mechanical pretreatment irradiation with high energy rays and the like.

Products of the method of the invention form stable composite materials which cannot be separated into a functional (magnetic) and a basic (non magnetic) part.

Surface coverage of microparticles using the method of the present invention is stable, thus, allowing for use of such covered microparticles in subsequent applications under various conditions involving chemical modification or physical treatment.

The method of the invention is very robust, works for different basic microparticles, for example synthetic organic polymers like polystyrene, natural polymers like cellulose or inorganic polymers like glass or controlled pore glass.

The method of the invention is very quick. Times between 30min and 2h are sufficient in most cases. The method does not produce toxic side products and does not require complex and sophisticated control of reaction conditions.

Since the method of the invention is performed under non-liquid conditions, said method can be performed over a wide range of different temperatures and is not limited to temperatures wherein a solvent necessary for a wet chemical reaction is still in liquid state.

In summary, the method of the invention is:

- Fast, easy and on a large scale to implement;

- Universally applicable (different materials are magnetizable)

- Starting materials commercially available and inexpensive

- No by-products

- Resulting products can be chemically modified (aminopropylation, chemical modification of the carrier substance) without loosing the nanoparticles on surfaces.

In order to allow for improved coverage of the microparticles, it has turned out to be particularly beneficial if the average particle size of the microparticles to be covered and the average particle size of the magnetic or magnetisable nanoparticles used for covering differ in such a manner that a ratio of its average particle sizes exceeds a certain threshold value. Such a ratio can be expressed as ratio $r_{m/n}$ formed from the mean particle size of the microparticles $S_m$ and the mean particle size of the magnetic or magnetisable nanoparticles $S_n$, wherein the ratio $r_{m/n}$ is calculated as follows:

$$r_{m/n} = S_m : S_n .$$

Preferably, $r_{m/n}$ is selected to be not less than 10, more preferably the ratio $r_{m/n}$ is selected to be within the range from 10 to 1000, even more preferably from 15 to 750, and particularly preferably from 20 to 500.

In the method of the present invention, the mixture of the microparticles and the magnetic or magnetisable nanoparticles is physically agitated under non-liquid conditions. For the purpose of the present invention, said physical agitation is performed under non-liquid conditions if the mixture neither is itself in liquid state (e.g. as liquid colloid, suspension, emulsion and/or solution), nor does the mixture comprise a substantial amount of one or more liquid solvents or of one or more constituents which are in liquid state at the conditions used for physical agitation. For the purpose of the present invention a substantial amount of said liquid solvents or constituents is an amount wherein the total amount of said solvents or constituents present in the mixtures at the beginning of physical agitation exceeds 10 weight-%, wherein all details on weight-% are based on total weight of the mixture at the beginning of physical agitation.

In contrast to the methods of the prior art for covering microparticles with magnetic or magnetisable nanoparticles, the method of the present invention can be conducted under dry conditions. Preferably, in the method of the invention the physical agitation of the mixture is performed under dry conditions. For the purpose of the present invention, physical agitation of the mixture is performed under dry conditions if the mixture has a moisture content at the beginning of physical agitation of less than 10%, preferably of less than 5%, more preferably of less than 2%. For the purpose of the present invention, the moisture content of the mixture at the beginning of physical agitation is determined using the well known Karl Fischer titration method.

In the method of the present invention, the microparticles are covered with magnetic or magnetisable nanoparticles without the need for any chemical reactions between said microparticles and said nanoparticles. Coverage of a surface of the microparticles with said nanoparticles is a result of mechanical energy introduced or applies during physical agitation of the mixture of said microparticles and said nanoparticles. Thus, the method of the present invention is preferably performed with the proviso that for covering the microparticles with the nanoparticles during physical agitation no chemical reaction takes place between the microparticles or a component thereof and the nanoparticles or a component thereof.

In order to allow for proper mixing of the microparticles and the magnetic or magnetisable nanoparticles in the mixture during physical agitation, it is beneficial if the microparticles and/or the nanoparticles are provided in particulate form so that the microparticles and nanoparticles can be mingled to form a blend. More preferably, the microparticles and/or the nanoparticles are provided in the form of a pourable granular material.

In the method of the present invention, the microparticles to be covered have a mean particle size $S_m$ selected from 1 $\mu$m to 1000 $\mu$m. Preferably, the microparticles have a mean particle size $S_m$ selected from 5 $\mu$m to 1000 $\mu$m, more preferably from 10 $\mu$m to 1000 $\mu$m, even more preferably from 20 $\mu$m to 1000 $\mu$m.

The method of the present invention is suitable for covering various types of microparticles and is not limited to microparticles formed of a particular material. The person skilled in the art is well aware materials suitable for formulation of microparticles. The specific composition of the microparticles to be covered may depend on the final purpose for which the covered microparticles are to be used.

The microparticles are preferably provided in form of a pourable granular material.

Preferably, the microparticles are formed of particulate material selected from natural or synthetic polymers, mineral, ceramics, glass, metals or combinations thereof.

Suitable synthetic polymers are preferably selected from selected from polystyrene (PS) polyvinylchloride (PVC), polyethylene (PE), polypropylene (PP), polyurethane (PU), polyethylenterephthalat (PET).

Suitable natural polymers are preferably selected from rubber, cellulose, in particular microcrystalline cellulose, more preferably microcrystalline cellulose with a mean particle size selected from the range of 10μm to 100μm, 15μm to 75μm, or 20μm to 60μm.

Suitable minerals are preferably selected from the group of natural silicates, in particular diatomaceous earth, alumosilicates as for example bentonite, zeolite and the like.

Suitable ceramics are preferably selected from ground porcelain, porous/foamed clay, any form of spherical and non-spherical silica, zircon and the like.

Suitable glass is preferably selected from porous glass in particular glasses with controlled pore size (known as CPG) and/or non-porous glasses as borosilicate glasses, lime glasses and the like.

Suitable metals are preferably selected from stainless steel or alloys comprising as a major component one or more metals thereof.

In the method of the present invention, the magnetic or magnetisable nanoparticles used for covering the microparticles have a mean particle size $S_n$ selected from 1 nm to 1000 nm. Preferably, the magnetic or magnetisable nanoparticles have a mean particle size $S_n$ selected from 5 nm to 500 nm, more preferably from 10 nm to 250 nm, even more preferably from 20 nm to 100 nm.

The method of the present invention is not limited to particular magnetic or magnetisable nanoparticles, but any type of nanoparticles formed of a particular material can be used provided that said nanoparticles are magnetic or magnetisable. The person skilled in the art is well aware materials suitable for formulation of magnetic or magnetisable nanoparticles. The specific composition of the magnetic or magnetisable nanoparticles to be used for covering of the microparticles may depend on the final purpose for which the covered microparticles are to be used. Preferably, the magnetic or magnetisable nanoparticles are formed of particulate material, in particular of particulate material in the form of pourable granular material.

For the purpose of the present invention, the magnetic or magnetisable nanoparticles are formed preferably of particulate material comprising or consisting of ferro- or ferrimagnetic or -magnetisable material. In particular, the magnetic or magnetisable nanoparticles are formed of particulate material comprising or consisting of a ferrite, like e.g. magnetite, maghemite of a ferrite of an alkaline earth metal.

In the method of the invention, the microparticles and the magnetic or magnetisable nanoparticles are contacted to form a mixture and the resulting mixture is subjected to physical agitation. The purpose of said physical agitation is to ensure direct contact between microparticles and magnetic or magnetisable nanoparticles while mechanical energy is applied to the mixture. Said physical agitation of said mixture of microparticles and magnetic or magnetisable nanoparticles can be performed using any technology suitable for physical agitation of a probe. The person skilled in the art is well aware of technologies and devices suitable for such physical agitation. Exemplary embodiments of such devices comprise a mixer, a shaker, a blender, a tumbler, a mill (like e.g. a ball mill), an ultrasonic device, and/or related devices.

It has surprisingly been found that the minimum duration of physical agitation required for effective covering of microparticles with magnetic or magnetisable nanoparticles in the method of the invention can be chosen rather short. Preferably, said physical agitation step comprises or consists of mixing of the mixture for at least 5 min, more preferably for at least 10 min, even more preferably for a time span selected from at least 15 min to 24 hours, in particular for a time span selected from at least 20 min to 5 hours.

The physical agitation can be performed over a broad range of shaking or vibration frequency while leading to efficient coverage of the microparticles with magnetic or magnetisable nanoparticles. Preferably, the mixture is mixed by physical agitation at a frequency of at least 5 Hz; more preferably at a frequency selected from 5 Hz to 1000 kHz; even more preferably at a frequency selected from 10 Hz to 500 kHz; and particularly preferably at a frequency selected from 20 Hz to 400 kHz.

Further, the method of the present invention can be performed over a broad range of temperatures. In particular since the method of the present invention is performed under non-liquid conditions, one is not limited to a temperature or atmosphere under which a potential solvent or liquid is still in liquid state. Preferably, the step of physical agitation is performed at a temperature selected from - 100°C to + 500 °C or at a temperature of less than 0°C or above 100 °C.

The present invention is also directed to microparticles covered with magnetic or magnetisable nanoparticles, wherein said microparticle has been covered with said magnetic or magnetisable nanoparticle using a method of the present invention.

The ratio between magnetic or magnetisable nanoparticles and microparticles is preferably at least in a range which gives covered microparticles magnetic properties depending on the needs/requirements of final use of magnetic microparticles. Optimal ratios depend on nature of nanoparticles and microparticles. Usually, ratios (w/w, nanoparticles vs. microparticles) between 0,5:10 and 5:10 are preferred, in particular between 1,5:10 and 2,5:10.

The microparticles suitable for use in the method of the present invention do not have to be porous. However, it can be beneficial to use microparticles with increased surface area like e.g. micro-, meso- or macroporous microparticles.

In the following, the present invention is explained in further detail by way of specific examples.

EXAMPLES:

Example 1:

*Application of Magnetite Nanoparticles to Crosslinked Polystyrene Microparticles*

5 g polystyrene microparticles cross-linked with divinylbenzene (diameter about 6-10$\mu$m, Sigma-Aldrich, cat.No.: 468312) and 1 g magnetite nanoparticles (diameter <50nm, Sigma-Aldrich, Cat. No.: 637106) are loaded in a 30mL Polyethylene bottle.

The vessel is shaken at 30Hz for 30 minutes in a suitable shaker. Upon shaking, the microparticles are coated with a layer of the nanoparticles.

After mechanical treatment, excess of unbound nanoparticles is separated by controlled magnetic fields. What remains is a composite material with superparamagnetic properties, which cannot be separated into magnetic and non-magnetic components by applying an inhomogeneous permanent magnetic field.

Example 2:

*Application of magnetite nanoparticles to spherical silica microparticles*

7,5 g spherical silica gel (40-75$\mu$m diameter, Supelco, Cat.No.: 53698) and 1 g magnetite (see example 1) nanoparticles are shaken in a 30mL polyethylene bottle at 30Hz for 30 minutes using a suitable shaker.

Upon shaking, the microparticles are coated with a layer of the nanoparticles.

After mechanical treatment, excess of unbound nanoparticles is separated by controlled magnetic fields. What remains is a composite material with superparamagnetic properties, which cannot be separated into magnetic and non-magnetic components by applying an inhomogeneous permanent magnetic field.

Example 3:

*Application of magnetite nanoparticles to microcrystalline cellulose*

100 g of microcrystalline cellulose (particle diameter 20 $\mu$m, Sigma-Aldrich, Cat. No.: 310697) are mixed in a ball mill with 20 g of magnetite nanoparticles (diameter 10-30 nm, Nanografi, Cat. No.: 28211010) for 1 h.

The resulting composite of cellulose and magnetite can no longer be separated into magnetic and non-magnetic components by applying an inhomogeneous permanent magnetic field.

Example 4:

*Applying Magnetite Nanoparticles to Controlled Pore Glass (CPG) glass powder*

100 g glass powder (Vitradent®, CPG 1000, grain size 3-10$\mu$m, LGC Biosearch) are mixed with 20g magnetite nanoparticles in a ball mill for 1h.

The resulting glass and magnetite composite material can no longer be separated into magnetic and non-magnetic components by applying an inhomogeneous permanent magnetic field.

Example 5:

*Apply magnetite to glass beads*

20 g glass beads (diameter 53 - 100$\mu$m, Sigma-Aldrich, Cat.Nr.: G8893) are agitated with 2 g magnetite nanoparticles (see example 3) in a 30mL plastic bottle at 30Hz for one hour.

Upon shaking, the glass spheres are coated with a layer of the nanoparticles.

After mechanical treatment, excess of unbound nanoparticles is separated by controlled magnetic fields. This leaves dark brown colored glass spheres with superparamagnetic properties, which cannot be separated into magnetic and non-magnetic components by applying an inhomogeneous permanent magnetic field.

Example 6:

*Production of magnetic ECTEOLA cellulose for nucleic acid isolation*

10 g of microcrystalline cellulose, to which magnetite nanoparticles are bound (according to **example 3**), are stirred into a solution of 20 g of NaOH in 50 ml of water and incubated for 30 minutes in an ice bath.

Then 24mL triethanolamine and 30mL epichlorohydrin are added and the mixture is heated to 80 ° C in a water bath.

When the reaction has subsided, cool the mixture in an ice bath and add 100mL 2M NaCl to this suspension.

The solid is filtered off with suction and washed in the order indicated:

1. 100mL 1M NaOH

2. 100mL of water

3. 100mL 1M $HNO_3$

4. 100mL of water

5. 100mL 0.5M NaOH

6. 100mL of water

7. 100mL Ethanol

8. 100mL Ethanol

Finally, the solid is sucked dry and dried at air for three days.

**Example 7:**

*Aminopropylation of CPG treated with magnetite*

40 g of the magnetic CPG prepared under example 4 are suspended in 250 ml of acetonitrile and incubated for 5 minutes in a water-jet vacuum.
Then 12.5 ml of aminopropyl-triethoxysilane are added to the suspension, shaken and incubated for 3 days with occasional shaking.
Solids are filtered off, washed 3 times with ethanol and dried at air.
Dry magnetic CPG is baked at 120°C for 4h to crosslink silanol groups at surface.

**Claims**

1.  Method for the production of microparticles covered with magnetic or magnetisable nanoparticles, the method comprising the steps:

    - providing microparticles with a mean particle size $S_m$ selected from 1 $\mu$m to 1000 $\mu$m;
    - providing magnetic or magnetisable nanoparticles with a mean particle size $S_n$ selected from 1 nm to 1000 nm;
    - contacting said microparticles and said magnetic or magnetisable nanoparticles to form a mixture;
    - physically agitating said mixture of said microparticles and said magnetic or magnetisable nanoparticles under non-liquid conditions.

2.  The method of claim 1, wherein a ratio $r_{m/n}$ between the mean particle size of the microparticles $S_m$ and the mean particle size of the magnetic or magnetisable nanoparticles $S_n$ with $r_{m/n} = S_m / S_n$ is not less than 10, preferably the ratio $r_{m/n}$ is selected to be from 10 to 1000, more preferably from 15 to 750, even more preferably from 20 to 500.

3.  The method of one of the preceding claims, wherein the physical agitation of said mixture is performed under dry conditions; preferably during physical agitation the mixture has a water content of less than 10%; more preferably the mixture is in non-liquid state during said physical agitation.

4.  The method of one of the preceding claims, wherein the microparticles have a mean particle size $S_m$ selected from 5 $\mu$m to 1000 $\mu$m, preferably from 10 $\mu$m to 1000 $\mu$m, more preferably from 20 $\mu$m to 1000 $\mu$m.

5.  The method of one of the preceding claims, wherein the magnetic or magnetisable nanoparticles have a mean particle size $S_n$ selected from 5 nm to 500 nm, preferably from 10 nm to 250 nm, more preferably from 20 nm to 100 nm.

6.  The method of one of the preceding claims, with the proviso that for covering the microparticles with the nanoparticles during physical agitation no chemical reaction takes place between the microparticles or a component thereof and the nanoparticles or a component thereof.

7.  The method of one of the preceding claims, wherein the microparticles are formed of particulate material, wherein said particulate material is provided as pourable granular material.

8.  The method of one of the preceding claims, wherein the microparticles are formed of particulate material comprising natural or synthetic polymers, minerals, ceramics, glass, metals or combinations thereof.

9.  The method of one of the preceding claims, wherein the magnetic or magnetisable nanoparticles are formed of particulate material, wherein said particulate material is provided as pourable granular material.

10. The method of one of the preceding claims, wherein the magnetic or magnetisable nanoparticles are formed of particulate material comprising a ferrit, even more preferably comprising magnetite or maghemite.

11. The method of one of the preceding claims, wherein said physical agitation comprises mixing of said mixture using a mixer, a shaker, a blender, a tumbler, a mill, and/or an ultrasonic device.

12. The method of one of the preceding claims, wherein said physical agitation comprises or consists of mixing for at least 5 min, preferably for at least 10 min, more preferably for at least 15 min to 24 hours, even more preferably for at least 20 min to 5 hours.

13. The method of one of the preceding claims, wherein said mixture is mixed by physical agitation at a frequency of at least 5 Hz; preferably at a frequency selected from 5 Hz to 1000 kHz; more preferably at a frequency selected from 10 Hz to 500 kHz; even more preferably at a frequency selected from 20 Hz to 400 kHz.

14. The method of one of the preceding claims, wherein said physical agitation is performed at a temperature selected from - 100°C to + 500 °C or at a temperature of less than 0°C or above 100 °C.

15. The method of one of the preceding claims, wherein said mixture further comprises an additional component chosen from the group of ionic and non-ionic detergents.

16. Microparticle covered with magnetic or magnetisable nanoparticles, wherein said microparticle has been covered with said magnetic or magnetisable nanoparticle using a method of one of claims 1 to 15.

Europäisches Patentamt

European Patent Office

Office européen des brevets

# EUROPEAN SEARCH REPORT

Application Number

EP 19 15 9391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 568 427 A1 (HITACHI METALS LTD [JP]) 31 August 2005 (2005-08-31) * paragraph [0049]; claim 13; examples 1,3 * | 1-16 | INV. B82Y25/00 H01F1/00 B01J2/00 |
| X | CN 108 335 820 A (UNIV TONGJI) 27 July 2018 (2018-07-27) * claim 1; examples 1,2 * | 1-16 | |
| A | JP 2017 059646 A (TOSHIBA CORP) 23 March 2017 (2017-03-23) * the whole document * | 1-16 | |

TECHNICAL FIELDS SEARCHED (IPC)

B82Y
H01F
B01J

The present search report has been drawn up for all claims

| Place of search | Date of completion of the search | Examiner |
|---|---|---|
| The Hague | 9 September 2019 | Gruber, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 15 9391

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2019

| Patent document cited in search report | | Publication date | Patent family member(s) | Publication date |
|---|---|---|---|---|
| EP 1568427 | A1 | 31-08-2005 | DE 602004010778 T2 | 30-04-2008 |
| | | | EP 1568427 A1 | 31-08-2005 |
| | | | EP 1800774 A2 | 27-06-2007 |
| | | | US 2005181202 A1 | 18-08-2005 |
| | | | US 2007144307 A1 | 28-06-2007 |
| | | | US 2007151417 A1 | 05-07-2007 |
| | | | US 2011159181 A1 | 30-06-2011 |
| | | | US 2011185851 A1 | 04-08-2011 |
| CN 108335820 | A | 27-07-2018 | NONE | |
| JP 2017059646 | A | 23-03-2017 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5734020 A
- DE 19912799 A1
- US 7754278 A